(19)

Europäisches
Patentamt

European
Patent Office

Office européen
des brevets

(11)     **EP 1 571 868 B1**

(12)                    **EUROPEAN PATENT SPECIFICATION**

(45) Date of publication and mention
of the grant of the patent:
**06.08.2008   Bulletin 2008/32**

(51) Int Cl.:
***H04Q 7/38*** (2006.01)

(21) Application number: **05101576.6**

(22) Date of filing: **01.03.2005**

(54) **Apparatus and method for determining the distance of a direct mode mobile station**

Vorrichtung und Verfahren zur Bestimmung des Abstands einer Mobilstation in direktem Betrieb

Dispositif et procédé pour déterminer la distance d'un mobile en mode direct

(84) Designated Contracting States:
**AT BE BG CH CY CZ DE DK EE ES FI FR GB GR
HU IE IS IT LI LT LU MC NL PL PT RO SE SI SK TR**

(30) Priority: **01.03.2004   GB 0404405**

(43) Date of publication of application:
**07.09.2005   Bulletin 2005/36**

(73) Proprietor: **MOTOROLA, INC.
Schaumburg, IL 60196 (US)**

(72) Inventors:
• **Piamenta, Moshe
67899, Tel Aviv (IL)**
• **Ofir, Gabi
67899, Tel Aviv (IL)**
• **Yannay, Alon
67899, Tel Aviv (IL)**
• **Suplin, Anatoliy
67899, Tel Aviv (IL)**

(74) Representative: **McCormack, Derek James et al
Optimus
Grove House, Lutyens Close,
Chineham Court,
Basingstoke,
Hampshire RG24 8AG (GB)**

(56) References cited:
**WO-A-01/84870          WO-A-01/97544
WO-A-02/37885          WO-A-97/29597
WO-A-98/56140          US-A1- 2003 060 168**

• **ETS: "Terrestrial Trunked Radio (TETRA);
Technical requirements for Direct Mode
Operation (DMO); Part 2: Radio aspects"
EUROPEAN TELECOMMUNICATION
STANDARD, no. ETS300396-2, 31 March 1998
(1998-03-31), pages 1-48, XP002329996 FRANCE**

## Description

### Field of the Invention

This invention relates to identifying a proximity of a communication unit in a wireless communication system. The invention is applicable to, but not limited to, transmission of a number of interrogation messages to one or more other direct mode communication units to identify a contactability/proximity of the transmitting wireless direct mode communication unit to the one or more other direct mode communication units based on the response(s).

### Background of the Invention

Wireless communication systems are distinguished over fixed communication systems, such as the public switched telephone networks (PSTN), principally in that subscriber units move between communication service areas and providers and in doing so encounter varying radio propagation environments. Therefore, the quality of a communication link to/from a subscriber unit varies as the subscriber unit changes location. The subscriber units are typically either vehicular-mounted 'mobile' or 'hand-portable' radio or cellular units. Henceforth, the term mobile station (MS) will be used for all such subscriber units. Wireless communication systems, for example cellular telephony or private mobile radio (PMR) communication systems, typically provide for radio telecommunication links to be arranged between a number of MSs.

In a wireless private mobile radio (PMR) communication system, it is known that a MS may operate outside a dedicated network coverage area by communicating in a direct communication link with at least one other MS. Such a communication mode is generally referred to as Direct Mode Operation (DMO). This term is in contrast to Trunked Mode operation (TMO) that enables the MS to work within network coverage, with communications controlled and facilitated by a switching and management infrastructure (SwMI). Hence, when a MS operates in DMO, there is no system controller and therefore no centralised timing synchronisation or infrastructure-controlled power control to help minimise interference.

An industry standard protocol widely employed in radio communication systems used by professional radio users such as the emergency services for communication between MSs in both the TMO and the DMO is that defined according to the TETRA (Terrestrial Trunked Radio) standard defined by the European Telecommunications Institute (ETSI), known as the 'TETRA standard'. The TETRA standard for direct mode radio communications is defined particularly in the ETSI publication 'Terrestrial Trunked Radio (TETRA); Technical requirements for Direct Mode Operation (DMO); Part 2 Radio aspects' European Telecommunication Standard, no. ETS300396-2, 31st March 1998, pages 1-48, XP002329996 France.

In the field of this invention, it is known that when working in Direct Mode, it is useful to know whether there are other DM users who are contactable, i.e. within communication range of a particular DM MS. In order to know which DM users are contactable, a DM MS would need to be able to identify, a location of the other DM MS(s), a status of such proximal MSs, their availability, etc.

A typical TMO mechanism for identifying radio units is to interrogate/poll the units to determine those units that are within range of the TMO system. However, polling is not used in an unsynchronised DMO environment, as multiple responses from a plurality of MSs would collide or overlap.

WO97/29597A describes a method of checking by a mobile station the presence of other mobile stations communicating on a direct mode channel.

However, there exists a need for an improved mechanism for identifying proximal wireless communication units in a DMO communication system, wherein the abovementioned disadvantages may be alleviated.

### Statement of Invention

In accordance with a first aspect of the present invention, there is provided a wireless direct mode mobile station, as defined in claim 1 of the accompanying claims.

In accordance with a second aspect of the present invention, there is provided a method of identifying a contactability or proximity from a first mobile station of a distal mobile station, the method being as defined in claim 8 of the accompanying claims.

In accordance with a third aspect of the present invention, there is provided a storage medium, as defined in claim 15 of the accompanying claims.

In accordance with a fourth aspect of the present invention, there is provided a wireless direct mode communication system, as defined in claim 16 of the accompanying claims.

Further features of the present invention are as disclosed in the dependent claims and in the embodiments of the invention to be described

Thus, by provision of a mechanism to enable a wireless direct mode communication unit which is a mobile station to effectively poll other wireless direct mode communication units which are also mobile stations, particularly when each (or a number of) subsequent polling operation(s) increases the communication range of the polling/interrogating message, it is possible to identify a proximity within a given proximity ring of a number of distal wireless direct mode communication units.

In the invention, each of the direct mode communication units, which may be either a transmitting unit which sends an interrogation message or a receiving unit which receives and responds to a received interrogation maessage from another unit or preferably both, is a mobile station. The units may communicate by a direct mode protocol for mobile stations, e.g. using a TDMA (time division multiple access) timing sequence in which certain time frames or slots are allocated to provide communication channels using one or more specified frequency bands. The units may all be members of a defined group, i..e a 'talk group', which are permitted to communicate using the protocol. The units may also be able to communicate alternatively in a trunked mode in which communications between units are directed through a fixed system infrastructure. The direct mode protocol by which the units communicate may be according to the TETRA standard as referred to earlier.

Embodiments of the present invention will now be described by way of example with reference to the accompanying drawings in which:

## Brief Description of the Drawings

FIG. 1 illustrates a simplified representation of a wireless direct mode communication system adapted to support the identification of wireless direct mode communication units in a vicinity of an interrogating wireless direct mode communication unit, in accordance with a preferred embodiment of the present invention;

FIG. 2 is a block schematic diagram representation of a wireless communication unit adapted to identify the contactability/proximity of other wireless communication units in its vicinity, in accordance with a preferred embodiment of the present invention;

FIG. 3 illustrates a flowchart of a preferred process of identifying a contactability/proximity of other wireless communication units, in accordance with a preferred embodiment of the present invention; and

FIG. 4 is a graph illustrating a relationship between transmit power and communication distance with respect to free space, Bacon and calculated path losses in a DMO communication system.

## Description of Preferred Embodiments

In summary, according to a preferred embodiment of the present invention a mechanism is provided to provide an appropriate protocol to support remote subscriber unit interrogation/ identification in a Direct Mode Operation.

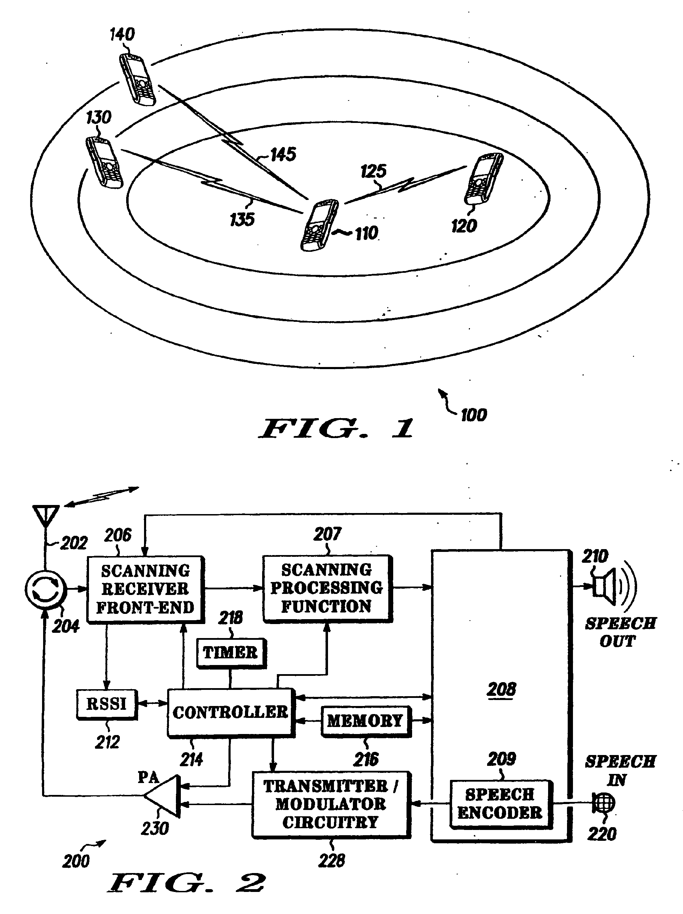

Referring now to FIG. 1, a simplified representation of a wireless direct mode communication system 100 is illustrated, adapted in accordance with a preferred embodiment of the present invention. The wireless direct mode communication system is adapted to support the identification of one or more wireless direct mode communication unit (s) in a vicinity of an interrogating wireless direct mode communication unit.

An interrogating DMO MS 110 wishes to identify a proximity of other wireless communication units such as MSs 120, 130 and/or 140.

The interrogating MS 110 transmits a first interrogation message 125, say at the lowest possible transmit power level, or at least one of the lower power levels. By transmitting at a low power level, the interrogation message is generally received and correctly decoded by those other DM MSs that are geographically nearest the transmitting/ interrogating DMO MS, namely MS 120. Upon reception and correct decoding of the interrogation message, DMO MS 120 transmits 125 a response message. By responding to the interrogation message, the interrogating DMO MS 110 is able to ascertain a proximity of the responding DMO MS 120, as the responding DMO MS 120 was clearly within a particular radius to have received and correctly decoded the interrogation message and equation(s).

The coverage distance provided in a DMO scenario can vary widely, even if the same transmit power is used. The coverage area primarily depends upon the topography. For example, the coverage in an urban area can be two-six times smaller than in an open area with the same transmit power. Therefore, the interrogating MS cannot accurately evaluate the distance. It can, however, evaluate the transmit power, which is needed to establish a call to any of the responding MSs.

Notably, once any responses to the first message have (or have not) been received, a number of subsequent query messages are transmitted 135, 145. It is envisaged that a number of such successive queries are set at a different (say increased) transmit power level. It is also envisaged that such successive queries may be targeted towards, for example, a specific group, network or another qualifier, such as a class of MS, RSSI input level and so forth within respective or different power level transmissions.

Therefore, in accordance with the preferred embodiment of the present invention, the interrogating MS 110 subsequently transmits a subsequent availability query message 135 at a higher power level and receives a response message from a second distal DMO MS 130. As the subsequent availability query message 135 is sent at a higher power level, it implicitly should cover a broader communication range and thereby likely reach an increased number of users. It is envisaged that further interrogation messages 145 are transmit at increased transmit power levels, with subsequent responses received from other DMO MS's 140, etc.

Referring now to FIG. 2, a block diagram of a wireless DMO subscriber unit/mobile station (MS) 200, adapted to support the inventive concepts of the preferred embodiments of the present invention, is shown. The DMO MS 200 contains an antenna 202 preferably coupled to a duplex filter or antenna switch 204 that provides isolation between receive and transmit chains within MS 200. The receiver chain includes receiver front-end circuitry 206 (effectively providing reception, filtering and intermediate or base-band frequency conversion). The front-end circuitry 206 is serially coupled to a signal processor 208 (generally realised by a digital signal processor DSP) via a baseband (back-end) processing circuit 207. A controller 214 is operably coupled to the front-end circuitry 206 and a received signal strength indication (RSSI) function 212; so that the receiver can calculate receive bit-error-rate (BER) or frame-error-rate (FER) or similar link-quality measurement data from recovered information via the RSSI function 212.

A memory element 216 is operably coupled to the signal processor 208 and controller 214 and stores a wide array of MS-specific data, for example decoding/encoding information. In accordance with the preferred embodiment of the present invention the memory element 216 has been adapted to store details of DMO MS(s) that responded to particular interrogation messages. A timer 218 is operably coupled to the controller 214 to control the timing of operations, namely the transmission or reception of time-dependent signals such as the speech frames, within the MS 200. As known in the art, most received signals that are processed by the signal processor 208 are typically applied to an output device 210, such as a speaker.

The transmit chain preferably comprises an input device 220, such as a microphone or keypad, coupled in series to a speech encoder 209 of the signal processor 208. An output from the signal processor 208 is input to the transmitter/modulation circuitry 228 and thereon to a power amplifier 230. The signal processing function 208, transmitter/modulation circuitry 228 and the power amplifier 230 are operationally responsive to the controller 214, with an output from the power amplifier 230 coupled to the duplex filter or antenna switch 204, as known in the art.

In accordance with the preferred embodiment of the present invention, the signal processor 208 has been adapted to include software code that initiates transmission of a series of interrogation messages, effectively yielding a multi-stage polling/scanning procedure. In this regard, the signal processor 208 initiates a number of polling/query transmissions to a number of proximal DMO MSs and, in response to any messages received, maintains a list of contactable/proximal DMO MSs in memory element 216.

Thus, in addition and according to the preferred embodiment of the present invention, a look-up table within the memory device 216 is preferably constructed to maintain such a list of contactable/proximal DMO MSs.

It is within the contemplation of the invention that the signal processor 208 and controller 214 may be combined into one element, or separate functions interconnected in a reasonable manner as known in the art. Hereafter, it will be assumed that the signal processor 208 can perform the requisite circuit controller functions. Furthermore, it is envisaged that the signal processor 208 in the transmit chain may be implemented as distinct from the corresponding processor function(s) in the receive chain. Alternatively, a single processor 208 may be used to implement the processing of both transmit and receive signals, as shown in FIG. 2.

Of course, the various components within the DMO MS 200 can be realised in discrete or integrated component form. Furthermore, it is within the contemplation of the invention that the DMO MS 200 may be any radio transceiver, such as a portable or mobile PMR radio, a mobile phone, a personal digital assistant, wireless-capable laptop computer.

It is envisaged that any DMO MS may start by interrogating/querying other MSs/peer terminals using, for example, a broadcast proprietary Protocol Message. A preferred format of the message depends on the base communication protocol that is used. However, in the preferred embodiment of the present invention, the base communication protocol preferably provides in addition to a ring number, i.e. a value indicating a geographic region, roughly between two concentric circles having dissimilar radii, where the corresponding coverage range from the interrogating DMO MS is dependent upon the particular transmit power level used, one or more of the following data items:

(i) Synchronisation information, such as the number of a burst;
(ii) A session number, such as that provided in a usage marker in a TETRA messaging protocol;
(iii) A response time span (i.e. the time that the interrogating querying terminal will continuously (in consecutive time slots) listen to responses following the query); and/or

(iv) One or more randomisation parameters, similar to the TETRA voice and data (V+D) associated access channel (AACH) broadcast, i.e. applied in a similar manner to TMO to determine the interval within which MS may transmit a message.

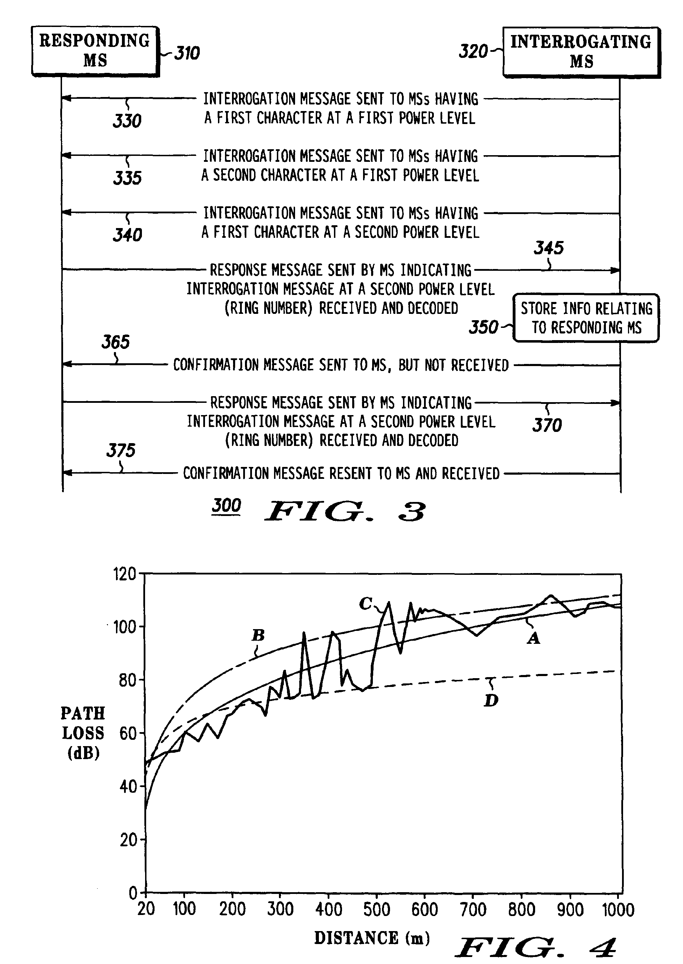

Referring now to FIG. 3, a flow diagram 300 illustrates a flowchart of a preferred process for an interrogating MS 320 to identify a proximity of other wireless communication units, such as responding MS 310, in accordance with a preferred embodiment of the present invention.

An interrogation message is preferably first transmit at the lowest possible transmit power level, or at least one of the lower power levels, as shown in step 330. Thus, by transmitting at a low power level, the interrogation message is only received and correctly decoded by those other DM MSs that are geographically nearest the transmitting DMO MS.

Notably, once any responses to the first message have (or have not within a particular time span) been received, a number of subsequent query messages are transmitted. It is envisaged that such successive queries may be set at the same power level where they are targeted towards, for example, a specific group, network or another qualifier, such as a class of MS, RSSI input level and so forth, as shown in step 335. However, either in addition, or in the alternative, it is envisaged that a number of successive queries may also be transmit at a slightly increased power level and therefore may be targeted towards the same or alternative specific groups, networks or other qualifiers.

The interrogating MS transmits a subsequent interrogation query message at a higher power level in step 340. As the subsequent interrogation query message is sent at a higher power level, it implicitly should reach successively more users.

In an enhanced embodiment of the present invention, these successive queries may declare, either explicitly or implicitly, a duration and/or start time of a listening interval. Furthermore, it is envisaged that the interrogation messages may be sent during Idle Free periods. Such a restriction may be introduced in order for the call (group/individual/SDS) transactions to take precedence over the interrogation transactions, especially in case of emergency. Therefore, it may be wiser to allow the PREEMPTION procedures during the interrogation transactions when some radios urgently need access the channel.

In this embodiment, the subsequent query messages are preferably dependent upon variations in the base communication protocol. For example, in the context of a TETRA DMO communication system, preferably each of the interrogation messages carries a particular Usage Marker (UM) value. In this manner, a MS is able to respond only once to any query bearing a specific UM. Thus, a DMO MS transmits a single interrogation (query) message for each concentric coverage ring, having the same UM.

The UM points to a certain interrogation session. That means, the MS that starts an interrogation session, shall assign a 'marker' to it. This allows the receiving party to distinguish between sessions and if the response has been already sent in the current session not to send it again. Note that a session may consist of a few rings transmission with different power levels. If the same MS starts another interrogation session, it is envisaged that it changes the UM.

Referring back to FIG. 3, let us assume that a targeted MS receives and successfully decodes the subsequent interrogation message sent from the interrogating MS. The targeted MS then sends a response message to the interrogating MS, as shown in step 345. Preferably, the response message comprises a number of the aforementioned message characteristics, including a decoded ring number.

It is envisaged that all such MSs may transmit an acknowledgement of their ability to receive and decode an interrogation message for each ring number. Any MS that is able to receive and decode these interrogation messages is expected to send a response message to the interrogating MS once per respective decoded ring number.

In order to avoid potential collisions with other MSs, it is envisaged that such response messages are sent in randomly selected frame and slot combinations, until the interrogating wireless DM communication unit acknowledges reception. The random pattern is designed to minimise collisions/interferences. Each of the response messages preferably carries the same Usage Marker as the one that was decoded from the received interrogation message.

In accordance with an enhanced embodiment of the present invention, it is envisaged that the response messages may comprise additional information, such as the responding MS's individual terminal subscriber identity (ITSI), a group subscriber identity (GSSI), the first decoded Ring number, a mobile network identity (MNI) value.

Furthermore, it is envisaged that the response message may also include any status sub-message, e.g. battery power level, serial number and other billing and usage statistics. Such an information set can be used for the dynamic DMO network management. If, for instance, new batteries are sent into the field, then according to the battery level and device serial number, the Network Manager can determine which devices need battery replacement. Furthermore, it enables the Network Manager to bill a group of MSs for using a DMO channel, if desired.

In order to identify the proximity of responding MSs, the interrogating MS stores the decoded information relating to any responding MS, as in step 350. Responses are to be sent during a pre-defined (and instructed) listening period of the interrogating MS. The responding MS randomly selects a slot and frame within the pre-defined listening period. Such a mechanism is proposed to avoid possible collisions when at least two MSs respond in the same period. In this manner, the interrogating MS is able to build up a geographical picture, albeit in the context of approximate range and communication capability, of other MS users in its vicinity.

The interrogating DMO MS then follows the listening interval with, or interjects within the listening interval, a short, and feedback control message (FCM), as shown in step 365. The FCM preferably indicates either the responding MS's ID(s), such as their TETRA ISSIs or Event Label, or specifies which received time slots carried no information, either due to transmission collision or missed transmission.

MSs that have already responded to the previous interrogation message, i.e. to a particular Usage Marker value, should not typically respond again. The responding MS preferably identifies, from the FCM, whether the interrogating MS received its response message. If the responding MS identifies that the interrogating MS did not receive its response message, as in step 365, the responding MS may decide to respond to the next Ring query message by repeating its response. Alternatively, the responding MS may repeat the response message to the current Ring query message, if an interjection mechanism is used, as shown in step 370. Notably, to ensure accuracy in the interrogation process, when a MS repeats its response, it will report the Ring number of the $1^{st}$ interrogation message that it received, and not the current one. This time, the interrogating MS sends out a FCM that is received by the responding MS identifying that the interrogating MS received its response message, as shown in step 375.

Advantageously, this procedure is repeated throughout a series of increasing transmit power levels to identify the proximity/range of particular MSs that respond to each interrogation message. Effectively, each power level is associated with a Ring number, and respective Ring IDs are specified within the respective interrogation/query messages. Thus, and advantageously, both the interrogating MS and the responding MS are aware of their distance from each other.

Dividing the process into power level stages, and singling out a specific group, network etc. for such stages, is intended to avoid channel congestions when too many MSs are available on the same frequency.

Notwithstanding the above, it is envisaged that every unit shall have the capability to disable its automatic respond message, if desired, for example for security reasons (in emergency situations) or battery saving purposes.

In an enhanced embodiment of the present invention, it is envisaged that a number of the parameters used in the communication availability determination process may be dependent upon the prevailing communication conditions. For example, it is envisaged that the listening interval length, the FCM distribution methods (Interjection or otherwise), the FCM format (ISSI-like or missing Time Slot data indication) and the number of Ring divisions may be made dependent upon variables such as MS population density and transmission power level resolution. This allows the interrogation time to be changed for groups with different MS population density. Furthermore, from the other side, it allows information having different levels of accuracy to be gathered. For example, if the interrogating MS doesn't use FCM methods.

In order to provide as efficient a communication unit proximity determination process as possible, the time slots should be configured to be as short as the underlying protocol provides for.

FIG. 4 illustrates a graph of path loss versus distance between two DM communication units in a TETRA DMO communication system, as described in the European Telecommunication Standards Institute Airport Scenario TETRA DMO Field Trial Report by the EP TETRA (EPT) DMO Planning Task Group. It can be seen from the graph that the path loss varies considerably as distance increases. For comparison purposes, a path loss line based on free-space loss and the Bacon model have also been provided on the graph. To aid comparison, a power 'trend line' was provided for a DMO trial path loss results. From this trend line, it can be seen that for short distances (<150m) the DMO trial path loss tends towards a free-space model and for longer distances (>200m) tends towards the Bacon model. Thus, by increasing the transmit power of a TETRA DMO communication unit; there is a comparable increase in coverage range.

Path Loss between 0dBi antennas in dB

$$PL = 92.45 + 20\ LOG\ f\ (GHz) + 20\ LOG\ D\ (km)\qquad [1]$$

It is within the contemplation of the invention that the inventive concepts of the present invention can be applied to any unsynchronised digital communication systems. One preferred example of such an application is in a TErrestrial Trunked RAdio (TETRA) wireless DMO communication system, where a MS may wish to identify a proximity of other MSs within the DMO system, prior to initiating any call set-up process.

It will be understood that the wireless DMO communication unit and methods of identifying a proximity of other wireless communication units, as described above, tend to provide at least one or more of the following advantages:

(i) It is now possible to identify a proximity of distal wireless communication unit in a DMO system dynamically and relatively easily;

(ii) The inventive concepts can serve as a model to regulate and manage unsynchronised, itinerant communication systems; and

(iii) The inventive concepts are easy to implement on a real-time processor.

Thus, a DMO wireless communication unit and mechanism for determining a contactability/ proximity of other wireless communication units is described, thereby alleviating at least some of the abovementioned disadvantages with known mechanisms.

**Claims**

1. A wireless direct mode mobile station (200) comprising:

   a transceiver (228, 230, 202); and
   a signal processor (208), operably coupled to the transceiver, for controlling the transmission and reception of wireless signals;

   wherein the signal processor (208) is operable to initiate a transmission of an interrogation message to one or more other direct mode mobile stations using a direct mode communication to which other direct mode mobile stations (120, 130) are programmed to respond if received to identify a presence of one or more other direct mode mobile stations,
   and **characterised in that** the signal processor (208) is operable to initiate transmission by the transceiver of a plurality of successive interrogation messages, including a first message (330, 335) and subsequently at least a second message (340) sent with an increased transmit power level, each of the messages including a ring number which is a value indicating a geographic region roughly between two concentric circles having dissimilar radii, wherein the corresponding coverage range from the interrogating mobile station is dependent upon the particular transmit power level used.

2. A mobile station (200) according to Claim 1_which is operable to send each of the interrogation messages on a direct mode communication channel to identify a number of contactable mobile stations on the same channel.

3. A mobile station (200) according to Claim 1 or Claim 2 wherein the signal processor (208) is operable to process one or more response messages received from the one or more other direct mode mobile stations in response to the transmission of the interrogation message and to store the identity of each responding mobile station in a scanning list.

4. A mobile station (200) according to any one preceding claim, wherein the signal processor is operable to send a number of subsequent interrogation messages to different classes or groups of direct mode communication units.

5. A mobile station (200) according to any one preceding claim, wherein the mobile station (200) is operable to send an interrogation message which comprises one or more of: (i) a session number to identify a current interrogation session;(ii) synchronisation information; (iii) a response time period indicating a length of time in which the interrogating mobile station will continuously listen to responses following the message; (iv) one or more randomisation parameters applied to determine an interval within which a mobile station may transmit a message.

6. A mobile station (200) according to any one preceding claim, which is configured to operate according to the TETRA standard.

7. A mobile station (200) according to any one preceding claim which is also operable to receive and respond to an interrogation message sent by a distal direct mode mobile station (200).

8. A method (300) of identifying a contactability or proximity from a first mobile station (320) of a distal mobile station (310), the method including the steps of:

   transmitting (330) an interrogation message from the first mobile station to a number of distal mobile stations;
   decoding the interrogation message at a distal mobile station; and
   transmitting (345) a response message from the distal mobile station to the first mobile station; **characterised by** the first mobile station transmitting a plurality of successive interrogation messages, including a first message (330) and subsequently at least a second message (340) sent with an increased transmit power level, each of the messages including a ring number which is a value indicating a geographic region roughly between two concentric circles having dissimilar radii, wherein the corresponding coverage range from the interrogating mobile station is dependent upon the particular transmit power level used.

9. A method according to claim 8, the method further including the step of transmitting the interrogation messages specifically to a group, network or other qualifier.

10. A method according to any one of preceding Claims 8 and 9, the method further including in the first mobile station the step of:

   decoding a received response message; and
   storing (350) the decoded response message in a memory.

11. A method according to Claim 10, the method further including the step of decoding a received response message to identify one or more of (i) a ring number; (ii) a session number.

12. A method according to any one of preceding claims 8 to 11, the method further including the step of:

   sending by the distal mobile station a response message in a randomly selected frame and/or slot combinations of a TDMA timing sequence.

13. A method according to any one of claims 8 to 12, the method further including the step of:

   transmitting a feedback control message (365) by the first mobile station to acknowledge receipt of the response message.

14. A method according to any one of preceding claims 8 to 13, the method further including the step of:

   repeating (365, 370) a transmission of a response message by the distal mobile station if a feedback control message is not received.

15. A storage medium storing processor-implementable instructions for controlling a processor to carry out the method of any one of claims 8 to 14.

16. A wireless direct mode communication system (100) including a plurality of wireless direct mode mobile stations each according to any one of claims 1 to 7.


**Patentansprüche**

1. Drahtlose Direktbetriebsartmobilstation (200) (Direct Mode Operation (DMO)), die umfasst:

   einen Transceiver (228, 230, 202); und
   einen Signalprozessor (208), der betreibbar an den Transceiver gekoppelt ist, zum Steuern der Übertragung und des Empfangs von drahtlosen Signalen;

   wobei der Signalprozessor (208) betreibbar ist, um eine Übertragung einer Abfragenachricht an eine oder mehrere andere Direktbetriebsartmobilstationen zu initiieren, unter Verwendung einer Direktbetriebsartkommunikation, auf die, wenn sie empfangen wird, andere Direktbetriebsartmobilstationen (120, 130) programmiert sind zu reagieren, um eine Anwesenheit von einer oder mehreren anderen Direktbetriebsartmobilstationen zu identifizieren, und **dadurch gekennzeichnet, dass** der Signalprozessor (208) betreibbar ist, um durch den Transceiver eine Übertragung einer Mehrzahl aufeinanderfolgender Abfragenachrichten zu initiieren, die eine erste Nachricht (330, 335) und nachfolgend mindestens eine zweite Nachricht (340) umfassen, die mit einem erhöhten Übertragungsleistungspegel gesendet wird, wobei jede der Nachrichten eine Ringzahl umfasst, die ein Wert ist, der einen geographischen Bereich anzeigt, der ungefähr zwischen zwei konzentrischen Kreisen mit ungleichen Radien liegt, wobei der entsprechende Versorgungsbereich von der abfragenden Mobilstation von dem verwendeten besonderen Übertragungsleistungspegel abhängt.

2. Mobilstation (200) gemäß Anspruch 1, die betreibbar ist, um jede der Abfragenachrichten auf einem Direktbetriebsartkommunikationskanal zu senden, um eine Zahl von kontaktierbaren Mobilstationen auf dem selben Kanal zu identifizieren.

3.  Mobilstation (200) gemäß Anspruch 1 oder Anspruch 2, wobei der Signalprozessor (208) betreibbar ist, um eine oder mehrere Antwortnachrichten, die von der einen oder den mehreren anderen Direktbetriebsartmobilstationen in Reaktion auf die Übertragung der Abfragenachricht empfangen werden, zu verarbeiten und die Identität einer jeden antwortenden Mobilstation in einer Abtastliste zu speichern.

4.  Mobilstation (200) gemäß einem der vorangehenden Ansprüche, wobei der Signalprozessor betreibbar ist, um eine Zahl von nachfolgenden Abfragenachrichten an unterschiedliche Klassen oder Gruppen von Direktbetriebsartkommunikationseinheiten zu senden.

5.  Mobilstation (200) gemäß einem der vorangehenden Ansprüche, wobei die Mobilstation (200) betreibbar ist, um eine Abfragenachricht zu senden, die mindestens eines der folgenden Merkmale umfasst: (i) eine Sitzungszahl, um eine aktuelle Abfragesitzung zu identifizieren; (ii) Synchronisierungsinformationen; (iii) eine Antwortzeitperiode, die eine Zeitspanne anzeigt, in der die abfragende Mobilstation kontinuierlich auf Antworten im Anschluss an die Nachricht hört; (iv) einen oder mehrere Randomisierungsparameter, die angewendet werden, um ein Intervall zu bestimmen, in dem eine Mobilstation eine Nachricht übertragen kann.

6.  Mobilstation (200) gemäß einem der vorangehenden Ansprüche, die konfiguriert ist, um gemäß dem TETRA-Stadard zu arbeiten.

7.  Mobilstation (200) gemäß einem der vorangehenden Ansprüche, die außerdem betreibbar ist, um eine Abfragenachricht, die durch eine distale Direktbetriebsartmobilstation (200) gesendet wird, zu empfangen und darauf zu antworten.

8.  Verfahren (300) eines Identifizierens einer Kontaktierbarkeit, oder einer Nähe zu einer ersten Mobilstation (320), einer distalen Mobilstation (310), wobei das Verfahren die folgenden Schritte umfasst:

    Übertragen (330) einer Abfragenachricht von der ersten Mobilstation zu einer Zahl von distalen Mobilstationen;
    Decodieren der Abfragenachricht bei einer distalen Mobilstation; und
    Übertragen (345) einer Antwortnachricht von der distalen Mobilstation an die erste Mobilstation; **gekennzeichnet dadurch, dass** die erste Mobilstation eine Mehrzahl von aufeinanderfolgende Abfragenachrichten überträgt, die eine erste Nachricht (330) und nachfolgend mindestens eine zweite Nachricht (340) umfassen, die mit einem erhöhten Übertragungsleistungspegel gesendet wird,

    wobei jede der Nachrichten eine Ringzahl umfasst, die ein Wert ist, der einen geographischen Bereich anzeigt, der ungefähr zwischen zwei konzentrischen Kreisen mit ungleichen Radien liegt, wobei der entsprechende Versorgungsbereich von der abfragenden Mobilstation von dem verwendeten besonderen Übertragungsleistungspegel abhängt.

9.  Verfahren gemäß Anspruch 8, wobei das Verfahren weiterhin den Schritt eines Übertragens der Abfragenachrichten im Besonderen an eine Gruppe, ein Netzwerk, oder ein anderes Abfragekriterium umfasst.

10. Verfahren gemäß einem der vorangehenden Ansprüche 8 und 9, wobei das Verfahren weiterhin in der ersten Mobilstation die folgenden Schritte umfasst:

    Decodieren einer empfangenen Antwortnachricht; und
    Speichern (350) der decodierten Antwortnachricht in einem Speicher.

11. Verfahren gemäß Anspruch 10, wobei das Verfahren weiterhin den Schritt eines Decodierens einer empfangenen Antwortnachricht umfasst, um eine oder mehrere (i) einer Ringzahl; (ii) einer Sitzungszahl zu identifizieren.

12. Verfahren gemäß einem der vorangehenden Ansprüche 8 bis 11, wobei das Verfahren weiterhin den folgenden Schritt umfasst:

    Senden durch die distale Mobilstation einer Antwortnachricht in einem zufällig ausgewählten Rahmen und/oder Schlitzkombinationen einer TDMA-Timing-Sequenz.

13. Verfahren gemäß einem der Ansprüche 8 bis 12, wobei das Verfahren weiterhin den folgenden Schritt umfasst:

Übertragen einer Rückkopplungssteuernachricht (365) durch die erste Mobilstation, um einen Empfang der Antwortnachricht zu bestätigen.

14. Verfahren gemäß einem der vorangehenden Ansprüche 8 bis 13, wobei das Verfahren weiterhin den folgenden Schritt umfasst:

Wiederholen (365, 370) einer Übertragung einer Antwortnachricht durch die distale Mobilstation, wenn keine Rückkopplungssteuernachricht empfangen wird.

15. Speichermittel, das prozessorimplementierbare Anweisungen zum Steuern eines Prozessors speichert, um das Verfahren gemäß einem der Ansprüche 8 bis 14 auszuführen.

16. Drahtloses Direktbetriebsartkommunikationssystem (100), das eine Mehrzahl von drahtlosen Direktbetriebsartmobilstationen, jede gemäß einem der Ansprüche 1 bis 7, umfasst.

## Revendications

1. Station mobile sans fil à mode direct (200), comprenant :

un émetteur-récepteur (228, 230, 202) ; et
un processeur de signaux (208), fonctionnellement couplé à l'émetteur-récepteur, pour commander la transmission et la réception de signaux sans fil ;

où le processeur de signaux (208) est adapté pour démarrer une transmission d'un message d'interrogation à une ou plusieurs stations mobiles à mode direct à l'aide d'une communication en mode direct, message auquel les autres stations mobiles à mode direct (120, 130) sont programmées pour répondre en cas de réception, pour identifier une présence d'une ou plusieurs autres stations mobiles à mode direct,
et **caractérisée en ce que** le processeur de signaux (208) est adapté pour démarrer une transmission par l'émetteur-récepteur d'une pluralité de messages d'interrogation successifs, incluant un premier message (330, 335) puis au moins un deuxième message (340) envoyé avec un niveau de puissance de transmission plus élevé, chacun des messages incluant un numéro d'anneau qui est une valeur indiquant une région géographique située à peu près entre deux cercles concentriques ayant des rayons différents, où la plage de couverture correspondante à partir de la station mobile interrogatrice dépend du niveau de puissance de transmission particulier utilisé.

2. Station mobile (200) selon la revendication 1, qui est adaptée pour envoyer chacun des messages d'interrogation sur un canal de communication en mode direct pour identifier un certain nombre de stations mobiles qui peuvent être contactées sur le même canal.

3. Station mobile (200) selon la revendication 1 ou la revendication 2, dans laquelle le processeur de signaux (208) est adapté pour traiter un ou plusieurs messages de réponse reçus en provenance de la ou des autres stations mobiles à mode direct en réponse à la transmission du message d'interrogation, et pour stocker dans une liste de balayage l'identité de chaque station mobile ayant répondu.

4. Station mobile (200) selon l'une quelconque des revendications précédentes, dans laquelle le processeur de signaux est adapté pour envoyer plusieurs messages d'interrogation successifs à différentes classes ou différents groupes d'unités de communication en mode direct.

5. Station mobile (200) selon l'une quelconque des revendications précédentes, dans laquelle la station mobile (200) est adaptée pour envoyer un message d'interrogation qui comprend un ou plusieurs de : (i) un numéro de session pour identifier une session d'interrogation en cours ; (ii) des informations de synchronisation ; (iii) un laps de temps de réponse indiquant une durée pendant laquelle la station mobile interrogatrice écoutera en continu les réponses à la suite du message ; (iv) un ou plusieurs paramètres d'aléatoirisation appliqués pour déterminer un intervalle à l'intérieur duquel une station mobile pourra transmettre un message.

6. Station mobile (200) selon l'une quelconque des revendications précédentes, qui est configurée pour fonctionner selon la norme TETRA.

**7.** Station mobile (200) selon l'une quelconque des revendications précédentes, qui est également adaptée pour recevoir un message d'interrogation envoyé par une station mobile à mode direct (200) distante, et pour y répondre.

**8.** Procédé (300) d'identification par une première station mobile (320) d'une station mobile (310) distante qui peut être contactée ou qui est située à proximité, le procédé comprenant les étapes selon lesquelles ;
la première station mobile transmet (330) un message d'interrogation à plusieurs stations mobiles distantes ;
une station mobile distante décode le message d'interrogation ; et
la station mobile distante transmet (345) un message de réponse à la première station mobile ;
**caractérisé en ce que** la première station mobile transmet une pluralité de messages d'interrogation successifs, incluant un premier message (330) puis au moins un deuxième message (340) envoyé avec un niveau de puissance de transmission plus élevé, chacun des messages incluant un numéro d'anneau qui est une valeur indiquant une région géographique située à peu près entre deux cercles concentriques ayant des rayons différents, où la plage de couverture correspondante à partir de la station mobile interrogatrice dépend du niveau de puissance de transmission particulier utilisé.

**9.** Procédé selon la revendication 8, le procédé comprenant en outre l'étape de transmission des messages d'interrogation spécifiquement à un groupe, un réseau ou un autre qualificatif.

**10.** Procédé selon l'une quelconque des revendications 8 et 9 précédentes, le procédé comprenant en outre les étapes consistant, dans la première station mobile, à :

décoder un message de réponse reçu ; et
stocker (350) le message de réponse décodé dans une mémoire.

**11.** Procédé selon la revendication 10, le procédé comprenant en outre l'étape de décodage d'un message de réponse reçu pour identifier un
ou plusieurs de : (i) un numéro d'anneau ; (ii) un numéro de session.

**12.** Procédé selon l'une quelconque des revendications 8 à 11 précédentes, le procédé comprenant en outre l'étape selon laquelle :

la station mobile distante envoie un message de réponse dans une combinaison de trames et/ou de tranches de temps sélectionnées de manière aléatoire d'une séquence de synchronisation TDMA.

**13.** Procédé selon l'une quelconque des revendications 8 à 12, le procédé comprenant en outre l'étape selon laquelle :

la première station mobile transmet un message de retour d'information (365) pour accuser réception du message de réponse.

**14.** Procédé selon l'une quelconque des revendications 8 à 13 précédentes, le procédé comprenant en outre l'étape selon laquelle :

la station mobile distante répète (365, 370) sa transmission d'un message de réponse si un message de retour d'information n'est pas reçu.

**15.** Support de stockage stockant des instructions exécutables par processeur pour commander un processeur de façon qu'il exécute le procédé selon l'une quelconque des revendications 8 à 14.

**16.** Système de communication sans fil en mode direct (100) incluant une pluralité de stations mobiles sans fil à mode direct, chacune étant selon l'une quelconque des revendications 1 à 7.

FIG. 1

FIG. 2

RESPONDING MS ~310

320~ INTERROGATING MS

← 330 — INTERROGATION MESSAGE SENT TO MSs HAVING — A FIRST CHARACTER AT A FIRST POWER LEVEL

← 335 — INTERROGATION MESSAGE SENT TO MSs HAVING — A SECOND CHARACTER AT A FIRST POWER LEVEL

← 340 — INTERROGATION MESSAGE SENT TO MSs HAVING — A FIRST CHARACTER AT A SECOND POWER LEVEL

345

— RESPONSE MESSAGE SENT BY MS INDICATING — INTERROGATION MESSAGE AT A SECOND POWER LEVEL (RING NUMBER) RECEIVED AND DECODED

350~ STORE INFO RELATING TO RESPONDING MS

365

← CONFIRMATION MESSAGE SENT TO MS, BUT NOT RECEIVED —

— RESPONSE MESSAGE SENT BY MS INDICATING — INTERROGATION MESSAGE AT A SECOND POWER LEVEL (RING NUMBER) RECEIVED AND DECODED 370

375

← CONFIRMATION MESSAGE RESENT TO MS AND RECEIVED —

### 300 _FIG. 3_

PATH LOSS (dB)

DISTANCE (m) _FIG. 4_

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• WO 9729597 A